# EUROPÄISCHE PATENTSCHRIFT

(11) **EP 1 059 476 B1**
(45) Veröffentlichungstag und Bekanntmachung des Hinweises auf die Patenterteilung: **01.06.2005**
(21) Anmeldenummer: 00108219.7
(22) Anmeldetag: 14.04.2000
(51) Int. Cl.: F16K 17/06, F16K 31/08, F16K 31/06, F15B 11/028, F15B 20/00, A01B 71/00, A01F 15/08

(54) **Landwirtschaftliche Ballenpresse mit einem Hydrauliksystem**
Agricultural balling press with an hydraulic system
Presse à balles agricole avec un système hydraulique

(30) Priorität: 09.06.1999 DE 19926243
(43) Veröffentlichungstag der Anmeldung: 13.12.2000
(73) Patentinhaber: Usines Claas France, 57050 Metz Woippy (FR)
(72) Erfinder: Wegert, Ralf, 49849 Wilsum (DE); Berkemann, Stephan, 33100 Paderborn (DE); Roth, Arséne, 70100 Arc les Gray (FR); Guthmann, Peter, 57000 Metz (FR)
(74) Vertreter: Kus, Sascha

(56) Entgegenhaltungen:
- DE-A- 3 920 893
- US-A- 3 531 080
- US-A- 3 684 238
- US-A- 4 070 928

## Beschreibung

Die Erfindung bezieht sich auf eine Landwirtschaftliche Ballenpresse mit einem Hydrauliksystem mit einer integrierten oder anschließbaren Druckquelle, Leitungen, Hydraulikventilen, Hydraulikzylindern, mit zumindest einem elektrischen Druckbegrenzungsventil mit variablem Grenzdruck, und einer Steuerungs- und/oder Regelungselektronik, durch die der Grenzdruck des elektrischen Druckbegrenzungsventils gesteuert und/oder geregelt wird.

Elektrische Druckbegrenzungsventile werden eingesetzt, um ein Hydrauliksystem vor Überlastung durch überhöhten Druck zu bewahren, um einen Maximaldruck im Hydrauliksystem einzustellen oder den Arbeitsdruck im Hydrauliksystem auf einen vorgewählten, einstellbaren Wert zu begrenzen. Dabei werden unterschiedliche Ventilbauarten eingesetzt. Neuerdings werden als Druckbegrenzungsventile auch Proportionalventile eingesetzt. Dabei handelt es sich um Schaltventile, die über eine auf das jeweilige Ventil abgestimmte Elektrik und Elektronik eine fast stufenlose Ansteuerung erlauben. Proportionalventile können Druck-, Wege- und Stromventile sein, die ein veränderliches elektrisches Eingangssignal in veränderliche Steuer- und Regelimpulse in der Hydraulik umsetzen. Der Magnet des Proportionalventils wird von einer elektrischen Spannung beaufschlagt, welche auf den Stößel wirkt und diesen bewegt. Über den Stößel wirkt die vom Magneten erzeugte Kraft auf das Hydroventil und verändert es proportional zur anliegenden Spannung. Der Proportionalmagnet ist so die Verknüpfungsstelle zwischen der Elektronik und der Hydraulik.

Eine gattungsgemäße Landwirtschaftliche Ballenpresse mit einem Hydrauliksystem mit einem gattungsgemäßen Proportionalventil ist beispielsweise der DE 19.7 18 229 zu entnehmen. Dort ist eine landwirtschaftliche Rundballenpresse gezeigt, deren Spannarme von einem Hydrauliksystem gesteuert werden. Die dabei verwendeten Spannarme für die umfangsbegrenzenden Riementrums werden in ihrer Aufwärtsbewegung beim Füllen der Preßkammer durch hydraulisch beaufschlagte Spannzylinder gehemmt oder begrenzt, um eine vorbestimmte Ballendichte oder -größe zu erreichen. Die Regelung der Spannarmbewegung erfolgte bisher über in den Hydraulikkreislauf eingeschaltete Magnetventile in der Weise, daß je nach Höhe der angelegten Stromspannung der mit dem Anker verbundene Ventilstößel und dessen Ventilkegel in Richtung auf den Ventilsitz gedrückt werden. Bei Spannung 0 ist somit auch der Druck im Hydraulikkreislauf und in den zu versorgenden Spannzylindern gleich 0. Bei maximaler Stromspannung ist analog auch der Druck maximal. Fällt der Strom aus, fällt auch der Druck im Hydrauliksystem auf 0. Tritt ein Stromausfall oder eine Störung in der Regelelektronik während des Betriebs der Rundballenpresse auf, so werden die Spannarme und damit die Riementrums nicht mehr vorgespannt. Empfindliche Störungen in der Arbeitsweise der gattungsgemäßen Rundballenpresse sind die Folge, denn eine kontrollierte und vorbestimmte Ballenbildung ist dann nicht mehr möglich. Es fehlt somit an einem Notlaufkreislauf, in dem der Betrieb der Ballenpresse aufrecht erhalten werden kann.

Um einen Notbetrieb zu ermöglichen, wird in der DE 197 18 229 vorgeschlagen, ein weiteres handverstellbares mechanisches Druckbegrenzungsventil im Hydrauliksystem vorzusehen. Das ist jedoch aufwendig. Auch in anderen landwirtschaftlichen Maschinen sind Hydrauliksysteme mit Proportionalventilen als Druckbegrenzungsventil installiert, denen eine Möglichkeit zum Notbetrieb bei Stromausfall fehlt oder bei denen ein erheblicher Aufwand betrieben wird, um einen Notbetrieb zu ermöglichen.

Es ist deshalb die Aufgabe der vorliegenden Erfindung, eine Landwirtschaftliche Ballenpresse mit einem Hydrauliksystem mit einem bzw. ein elektrisches Druckbegrenzungsventil vorzusehen, welches auch bei einem Spannungsabfall der das elektrische Druckbegrenzungsventil ansteuernden Steuerung bzw. Regelung einen Notlaufbetrieb ermöglicht.

Die aufgezeigten Nachteile werden erfindungsgemäß vermieden, indem das Druckbegrenzungsventil ein krafterzeugendes Kraftelement insbesondere in Form einer unter Vorspannung stehender Druckfeder aufweist, dessen Kraftkomponente der durch einen im Druckbegrenzungsventil angeordneten Ventilmagneten erzeugbaren Kraft entgegengerichtet ist und die Kraftkomponente das Druckbegrenzungsventil schließt, wenn der Ventilmagnet des Druckbegrenzungsventils stromlos ist.

Die Funktion des Hydrauliksystems, das durch ein erfindungsgemäß ausgestaltetes Druckbegrenzungsventil auf der Druckseite abgesichert und gesteuert wird, bleibt somit auch dann aufrechterhalten, wenn keine Spannung am Ventilmagneten, wie beispielsweise bei einem Stromausfall, anliegt. In weiterer Ausbildung der Erfindung kann die Stellkraft der Kraftkomponente vorwählbar ausgestaltet sein, beispielsweise mittels einer Stellschraube.

Anhand von Zeichnungen soll die Erfindung beispielhaft erläutert werden. Es zeigen:
- Figur 1: ein erfindungsgemäßes elektrisches Druckbegrenzungsventil,
- Figur 2: eine schematische Darstellung eines Hydrauliksystems mit einem elektrischen Druckbegrenzungsventil,
- Figur 3: eine Rundballenpresse als Anwendungsbeispiel für ein erfindungsgemäßes Druckbegrenzungsventil.

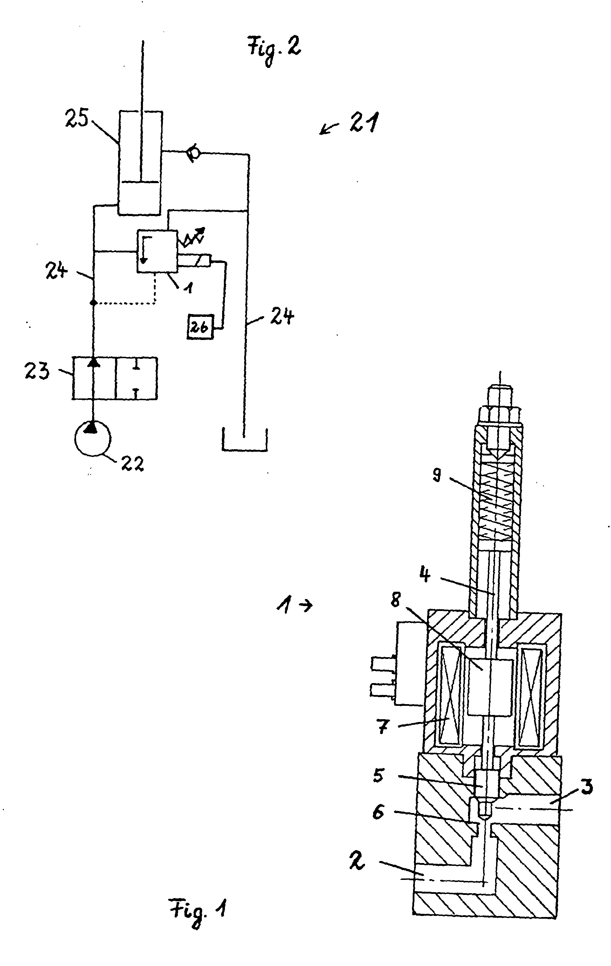

In Figur 1 ist ein elektronisches Druckbegrenzungsventil 1 gezeigt. Mit 2 ist der Druckmittelzufluß und mit 3 der Druckmittelabfluß bezeichnet. Der Ventilstößel trägt das Bezugszeichen 4. Der Magnet des Ventils ist mit 7, der mit dem Ventilstößel 4 verbundene Ventilanker mit 8 bezeichnet. Auf den Ventilstößel 4 wirkt bei angelegter, veränderbarer Stromspannung über den Ventilanker 8 eine nach oben gerichtete (den Ventildurchfluß bestimmende) Zugkraft ein, der permanent eine von einer Druckfeder 9 auf den Ventilstößel 4 übetragene Druckkraft entgegenwirkt. In der gewählten Darstellung ist die Zugkraft des Ventilankers 8 durch die Höhe der angelegten Spannung größer als die Kraft der Druckfeder 9, was sich darin zeigt, daß der Spalt zwischen Ventilkegel 5 und Ventilsitz 6 nicht geschlossen ist. Entfällt die Zugkraft, die auf den Ventilanker 8 aus der an dem Ventilmagneten 7 anliegenden elektrischen Spannung resultiert, verbleiben als einzig wirksame Kraftkomponenten einerseits die Druckfeder 9 und der gegen die Druckfeder 9 wirkende Druck aus dem Druckmittelzufluß 2 andererseits. Bei einem Ausfall der elektrischen Spannung ist es auf diese Weise immer noch möglich, die Druckseite eines durch ein elektrisches Druckbegrenzungsventil 1 abgesicherten Hydrauliksystems 21 unter Druck zu betreiben.

Figur 2 zeigt ein Hydrauliksystem 21, in das ein elektrisches Druckbegrenzungsventil 1 integriert ist. Es besteht weiterhin aus einer Hydraulikpumpe 22 als Druckquelle, einem Hydraulikventil 23, Leitungen 24 und einem Hydraulikzylinder 25. Weiter ist eine Steuer- und/oder Regelvorrichtung 26 gezeigt, durch das der Grenzdruck des elektrischen Druckbegrenzungsventils 1 gesteuert und/oder geregelt wird. Die Steuer- und/oder Regelvorrichtung 26 verfügt über einen nicht näher dargestellten Anschluß an einen oder mehrere Drucksensoren, durch den der Druck-Istwert an einer oder mehreren geeigneten Stellen im Hydrauliksystem ermittelt und an die Steuer- und/oder Regelvorrichtung 26 übermittelt wird. Die Sensormeßwerte werden ausgewertet, indem sie mit Druck-Sollwerten verglichen und bei Abweichungen der Soll- von den Istwerten neue Sollwerte für die Stellposition des Ventilstößels 4 des Druckbegrenzungsventils 1 ermittelt werden. Für die neuen Sollwerte werden neue Spannungsgrößen für die Elektrik des Druckbegrenzungsventils 1 ermittelt und eingestellt, durch die der Ventilstößel 4 in eine neue Position bewegbar ist.

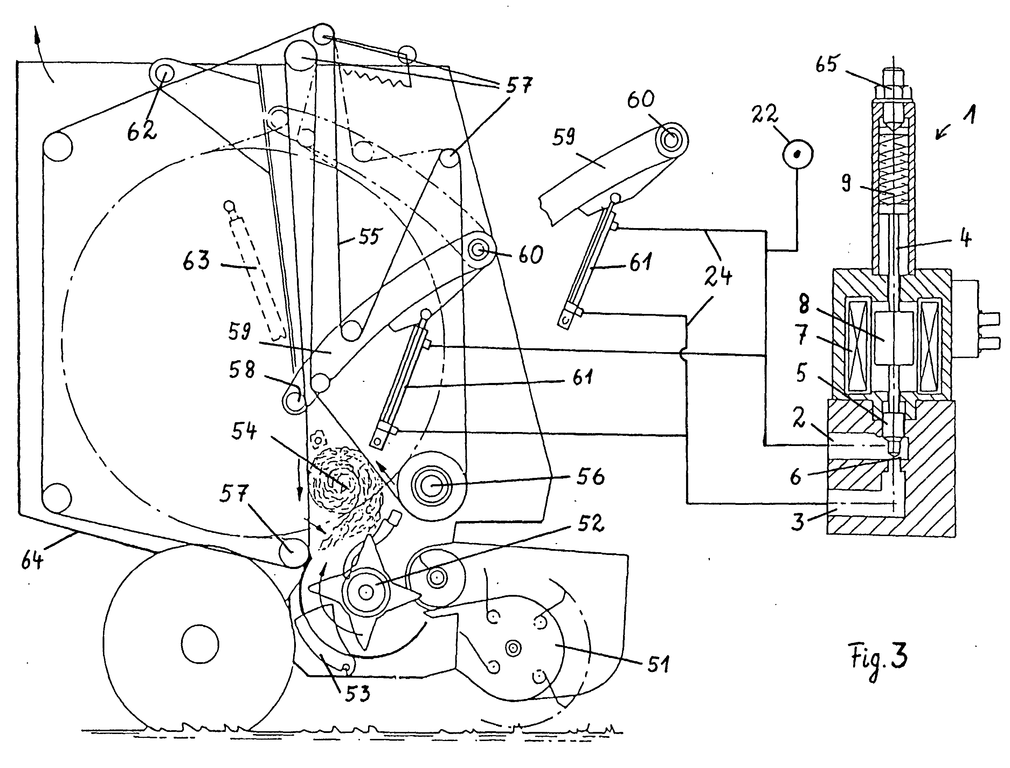

In schematischer Seitenansicht ist in Figur 3 eine Aufsammelpresse für landwirtschaftliches Halmgut zur Formung runder Erntegutballen dargestellt. Dabei ist mit 51 eine Pickup-Trommel bezeichnet, die das Erntegut vom Feld aufnimmt und einer aus Rotor 52 und Gegenmesstern 53 bestehenden Schneideinrichtung zuleitet. Von der Schneideinrichtung gelangt das Gut in die Preßkammer 54, deren größenvariabler bei Gutzuführ von einem Minimum auf ein Maximum anwachsender Raum durch rahmenfeste, längsgeteilte Seitenwände und durch parallel zueinander angeordnete angetriebene Riementrums 55 definiert wird. Die Riementrums 55 werden über eine Walze 56 angetrieben und über rahmenfeste Rollen 57 ebenso geführt wie über Rollen 58, die zwei an jeder Maschinenseite angeordnete Spannarme 59 miteinander verbinden. Die Spannarme 59 sind um eine Achse 60 verschwenkbar. Ihre Aufwärtsbewegung wird durch hydraulisch beaufschlagte Spannzylinder 61 gehemmt oder begrenzt, wenn sich die Preßkammer 54 mit Erntegut füllt. Der im Umfang wachsende Ballen erzeugt also einen zunehmenden Druck in den Spannzylindern 61, der über die Leitungen 24 auf den Druckmittelzufluß 2 des elektrischen Druckbegrenzungsventils 1 wirkt. Der Druck wirkt gegen die Steuerfläche des Ventilkegels 5 des Ventilstößels 4. Eine Gegenkraft erzeugt die Druckfeder 9. Der Ventilmagnet 7 kann zusammen mit dem Druck, der gegen den Ventilkegel 5 wirkt, eine gegen die Druckfeder 9 wirkende Kraft erzeugen, wenn an dem Ventilmagneten 7 eine Spannung anliegt. Die elektrische Spannung ist in einem Proportionalventil variabel, so daß sich auch die Summe aus dem Druck, der gegen den Ventilkegel 5 wirkt, und der Kraft aus dem Ventilmagneten 7 variieren läßt. Durch Vorwahl einer jeweiligen an dem Ventilmagnet 7 anliegenden Spannung können variable Ballendichten erzeugt werden, weil bei Überschreitung mit der Summe des Drucks, der gegen den Ventilkegel 5 wirkt, und der Kraft aus dem Ventilmagneten 7 über den Kraftwert der Gegenkraft, die die Druckfeder 9 erzeugt, der Ventilkegel 5 den Ventilstößel 4 hochdrückt, dadurch der Ventilsitz geöffnet wird und das Druckmittel durch die Öffnung in Richtung des Druckmittelabflusses 3 abfließen kann. Es läßt sich so eine vorbestimmte Ballendichte erreichen. Der rückwärtige Teil 64 der Preßkammer 54 ist zu Zwecken der Kammerleerung um die Achse 62 vermittels eines Schwenkzylinders 63 aufklappbar. Auch bei dem Schwenkzylinder 63 kann eine Zuhaltekraft über ein elektrisches Druckbegrenzungsventil 1 geregelt werden, wobei hierzu eine Notbetriebsfunktion gemäß dieser Beschreibung adaptierbar ist.

Um die Bewegung der Spannarme 59 durch Emtegutzufuhr einerseits und Spannzylinder 61 andererseits zu bestimmen, ist in den Druckmittelkreislauf für die Spannzylinder 61 ein elektromagnetisch betätigtes Druckbegrenzungsventil 1 integriert. Bei Stromausfall schließt die Druckfeder 9 den Ventildurchfluß und gewährleistet so, daß die Einwirkung der Spannzylinder 61 auf die Spannarme 59 erhalten bleibt und der Ballenbildungsprozeß nicht außer Kontrolle gerät. Die Vorspannung der Druckfeder 9 ist über eine Stellschraube 65 einstellbar.
- 1 -: elektrisches Druckbegrenzungsventil
- 2 -: Druckmittelzufluß
- 3 -: Druckmittelabfluß
- 4 -: Ventilstößel
- 5 -: Ventilkegel
- 6 -: Ventilsitz
- 7 -: Ventilmagnet
- 8 -: Ventilanker
- 9 -: Druckfeder
- 21 -: Hydrauliksystem
- 22 -: Hydraulikpumpe
- 23 -: Hydraulikventil
- 24 -: Hydraulikleitung
- 25 -: Hydraulikzylinder
- 26 -: Steuer- und/oder Regeleinrichtung
- 51 -: Pickup-Trommel
- 52 -: Schneidrotor
- 53 -: Gegenmesser
- 54 -: Preßkammer
- 55 -: Riementrums
- 56 -: Antriebwalze für Riementrums
- 57 -: rahmenfeste Rollen für Riementrums
- 58 -: Spannarme 59 verbindende Trum-Rollen
- 59 -: Spannarme
- 60 -: Achse für Spannarme
- 61 -: Spannzylinder für Spannarme
- 62 -: Schwenkachse für Preßkammerteil 64
- 63 -: Schwenkzylinder
- 64 -: rückwärtiger Preßkammerteil
- 65 -: Stellschraube

## Patentansprüche

1. Landwirtschaftliche Ballenpresse mit einem Hydrauliksystem mit einer integrierten oder anschließbaren Druckquelle, Leitungen, Hydraulikventilen, Hydraulikzylindern, mit zumindest einem elektrischen Druckbegrenzungsventil mit variablem Grenzdruck und einer Steuerungs- und/oder Regelungselektronik, durch die der Grenzdruck des elektrischen Druckbegrenzungsventil gesteuert und/oder geregelt wird,
**dadurch gekennzeichnet, dass**
das Druckbegrenzungsventil (1) ein krafterzeugendes Kraftelement, insbesondere in Form einer unter Vorspannung stehenden Druckfeder (9) aufweist, dessen Kraftkomponente der durch einen im Druckbegrenzungsventil (1) angeordneten Ventilmagneten (7) erzeugbaren Kraft entgegengerichtet ist und die Kraftkomponente das Druckbegrenzungsventil (1) schließt, wenn der Ventilmagnet (7) des Druckbegrenzungsventils (1) stromlos ist.

2. Landwirtschaftliche Ballenpresse nach Anspruch 1,
**dadurch gekennzeichnet, daß** das Kraftelement eine unter Vorspannung stehende Druckfeder ist und
daß die Vorspannung der Druckfeder (9) des Druckbegrenzungsventils (1) vorwählbar ist.

3. Landwirtschaftliche Ballenpresse nach Anspruch 2,
**dadurch gekennzeichnet,**
**daß** die Vorspannung der Druckfeder (9) über eine Stellschraube (65) erfolgt.

## Claims

1. An agricultural bale press with a hydraulic system with an integrated or connectable pressure source, lines, hydraulic valves, hydraulic cylinders, with at least one electrical pressure limiting valve with a variable limit pressure and an electronic control and/or regulating system by which the limit pressure of the electrical pressure limiting valve is controlled and/or regulated,
**characterised in that**
the pressure limiting valve (1) has a force-producing force element, in particular in the form of a compression spring (9) which is under a prestress, the force component of the force element being in opposition to the force which can be produced by a valve solenoid (7) arranged in the pressure limiting valve (1), and the force component closes the pressure limiting valve (1) when the valve solenoid (7) of the pressure limiting valve (1) is without current.

2. An agricultural bale press according to claim 1 **characterised in that** the force element is a compression spring which is under a prestress and that the prestress of the compression spring (9) of the pressure limiting valve (1) is preselectable.

3. An agricultural bale press according to claim 2 **characterised in that** the prestress of the compression spring (8) is afforded by way of an adjusting screw (65).

## Revendications

1. Presse agricole à balles avec un système hydraulique comprenant une source de pression intégrée ou raccordée, des conduites, des valves hydrauliques, des vérins hydrauliques, avec au moins une valve électrique de limitation de pression à pression limite variable et une électronique de commande et/ou de réglage permettant de commander et/ou de régler la pression limite de la valve électrique de limitation de pression, **caractérisée en ce que** la valve de limitation de pression (1) comporte un élément de force générateur de force, en particulier en forme de ressort de compression sous précontrainte (9), dont la composante de force est orientée à l'opposé de la force produite par un électro-aimant de valve (7) disposé dans la valve de limitation de pression (1), et la composante de force ferme la valve de limitation de pression (1) lorsque l'électro-aimant de valve (7) de la valve de limitation de pression (1) est hors tension.

2. Presse agricole à balles selon la revendication 1, **caractérisée en ce que** l'élément de force est un ressort de compression sous précontrainte et **en ce que** la précontrainte du ressort de compression (9) de la valve de limitation de pression (1) peut être présélectionnée.

3. Presse agricole à balles selon la revendication 2, **caractérisée en ce que** la précontrainte du ressort de compression (9) est produite par l'intermédiaire d'une vis de réglage (65).
